# EUROPÄISCHE PATENTSCHRIFT

(11) **EP 4 005 742 B1**
(45) Veröffentlichungstag und Bekanntmachung des Hinweises auf die Patenterteilung: **21.02.2024**
(21) Anmeldenummer: 20210355.2
(22) Anmeldetag: 27.11.2020
(51) Int. Cl.: B25J 9/00, B25J 13/08, B25J 15/06, B25J 17/02, B25J 19/00

(54) **ETIKETTENAPPLIKATOR**
LABEL APPLICATOR
APPLICATEUR D'ÉTIQUETTES

(43) Veröffentlichungstag der Anmeldung: 01.06.2022
(73) Patentinhaber: Bizerba SE & Co. KG, 72336 Balingen (DE)
(72) Erfinder: PRIES, Markus, 72488 Sigmaringen (DE); REMPEL, Konstantin, 49610 Quakenbrück (DE); NAMSUK, Winai, 71116 Gärtringen (DE); SCHELLE, Christian, 72511 Bingen (DE); LAUER, Jonas, 72458 Albstadt-Ebingen (DE)
(74) Vertreter: Kohler Schmid Möbus Patentanwälte

(56) Entgegenhaltungen:
- CN-A- 104 858 867
- DE-A1-102015 223 528
- DE-A1-102019 103 794
- JP-A- H05 177 572
- JP-A- H05 293 783
- JP-A- 2001 035 862
- JP-A- 2004 306 179
- US-A1- 2016 229 066

## Beschreibung

Die Erfindung betrifft eine Etikettiervorrichtung für eine Dehnfolienverpackungsmaschine, umfassend einen Roboter mit Delta-Kinematik, mit wenigstens zwei Gelenkarmen, die jeweils einen ersten und einen zweiten Armabschnitt aufweisen, welche gelenkig miteinander verbunden sind, wobei die Gelenkarme jeweils an einem ersten Ende mit einer Roboterbasis und an einem zweiten Ende mit einer Plattform einer zu bewegenden Aufnahmeeinrichtung zur Aufnahme eines Etiketts gelenkig verbunden sind, und wobei die Gelenkarme an der Roboterbasis um eine jeweilige Rotationsachse schwenkbar und jeweils von einem fest an der Roboterbasis angebrachten Motor angetrieben sind.

Aus der EP 2 298 510 B1 ist eine derartige Etikettiervorrichtung bekannt. Durch den Roboter mit Delta-Kinematik lässt sich bei Verwendung von kostengünstigen Motoren mit geringer Stellgenauigkeit eine hohe Positioniergenauigkeit erreichen.

Aus der EP 2 651 769 B1 ist eine Etikettiervorrichtung mit einem Applikator mit Gelenkarmen bekannt, der durch einen Schrittmotor angetrieben wird. Ein Steuergerät steuert den Betriebsstrom des Schrittmotors in Abhängigkeit von der momentanen Geschwindigkeit des Applikators und dem maximalen Nennstrom des Schrittmotors. Dadurch kann der Stromverbrauch des Applikators gering gehalten werden.

Die DE 10 2019 103 794 A1 offenbart einen Saugnapf, bei dem unter Ausstrahlung von Gas zwischen einem Bodenwandabschnitt und einem Saugobjekt ein Unterdruck erzeugt wird. Eine Unterdruckunterbrechungsöffnung, die durch einen Deckelabschnitt verschlossen wird, dient der Unterbrechung des Unterdrucks. Ein Antriebsabschnitt ist dazu ausgebildet, den Deckelabschnitt zu bewegen und damit die Unterdruckunterbrechungsöffnung zu öffnen oder zu verschließen.

Die JP 2001 035862 A offenbart einen Düsenhalter, der in einem Gleitlager verschiebbar gelagert ist. Zum Ansaugen eines Saugobjekts in einer ausgefahrenen Stellung wird in dem Düsenhalter ein Vakuum erzeugt. Zum anschließenden Entfernen des Suagobjekts von dem Düsenhalter in einer eingefahrenen Stellung des Düsenhalters wird das Vakuum durch eine Öffnung in dem Düsenhalter beseitigt, indem durch die Öffnung in der eingefahrenen Stellung des Düsenhalters Umgebungsluft hindurchtritt.

Aus der JP H05 293783 A ist eine Fördervorrichtung mit Ansaugkolben zum Transport von Halbleiterbauteilen bekannt. Die Ansaugkolben sind durch Flaschenzüge und ein Gestänge drehbar und verschiebbar.

Die DE 10 2015 223528 A1 betrifft einen Parallel-Kinematik-Roboter mit Arbeitsarmen zum Bewegen eines Arbeitsinstruments und mit einer Entlastungseinrichtung zum Aufnehmen einer Masse des Arbeitsinstruments.

Die US 2016/229066 A1 offenbart einen Industrieroboter mit Parallelkinematik, wobei ein Hohlköper des Roboters dazu dient, ein Drehmoment eines Rotationsantriebs an der Roboterbasis auf einen Greifer an einem Trägerelement des Roboters zu übertragen. Dazu sind in dem Hohlkörper eine Ventilsteuerung und Versorgungsleitungen für die Zuleitung von Druckluft oder Druckflüssigkeit angeordnet.

Die bekannten Etikettiervorrichtungen stellen vergleichsweise hohe Anforderungen an die Steuerung und die verwendeten Motoren. Um zu verhindern, dass bei einem Stromausfall die Plattform der Etikettiervorrichtung nach unten fällt und einen Schaden anrichtet oder beschädigt wird, müssen die Motoren selbsthemmend ausgestaltet sein. Alternativ muss die Etikettiervorrichtung dazu ausgebildet sein, dass bei genau einem Motor bei Stromausfall ein Kurzschluss verursacht wird, wodurch die Plattform an eine geeignete Position bewegt und ein Schaden verhindert wird. Der Antrieb der Plattform erfolgt ausschließlich über die Motoren, wodurch die Motoren vergleichsweise hoch belastet sind.

Des Weiteren ist der bisher stets erforderliche Einsatz eines elektrischen Ventils zur Druckentlastung aufwändig und kostenintensiv. Außerdem muss dieses Ventil in der Regel separat angesteuert werden, was ebenfalls Aufwand erfordert. Zudem muss mit einer Sensorik herausgefunden werden, wann eine Entlastung notwendig ist.

Aufgabe der vorliegenden Erfindung ist es demgegenüber, eine Etikettiervorrichtung der eingangs definierten Art konstruktiv deutlich einfacher und sicherer auszugestalten, insbesondere in Bezug auf die Anforderungen an die Steuerung und den Antrieb.

Gelöst wird diese Aufgabe hinsichtlich der Vorrichtung auf technisch besonders einfache und überraschend wirkungsvolle Weise durch eine gattungsgemäße Etikettiervorrichtung, die sich dadurch auszeichnet, dass die Aufnahmeeinrichtung eine Grundplatte und einen Stößel zur Aufnahme des Etiketts aufweist,
dass der Stößel einen an der Grundplatte montierten und in Bezug auf die Grundplatte in Längsrichtung des Stößels nicht-verschiebbaren festen Teil und einen in Längsrichtung des Stößels in dem festen Teil beweglichen Teil des Stößels mit einem vorderen Ende zur Aufnahme eines Etiketts umfasst,
dass der Stößel einen mechanischen Druckregler zur Unterbrechung eines zur Aufnahme des Etiketts dienenden Unterdrucks im Stößel aufweist,
und dass der bewegliche Teil des Stößels in Richtung der Längsachse des Stößels durch den festen Teil des Stößels hindurch in Richtung auf die Grundplatte in eine eingefahrene Stellung verschiebbar ist, wobei der bewegliche Teil des Stößels eine Öffnung aufweist, wobei die Öffnung in einer ausgefahrenen Stellung des beweglichen Teils des Stößels zur Aufnahme des Etiketts durch den festen Teil des Stößels gasdicht überdeckt ist und in der eingefahrenen Stellung des beweglichen Teils des Stößels durch den festen Teil des Stößels nicht überdeckt ist.

Die Unterbrechung des Luftunterdrucks erfolgt auf mechanische Weise, wenn der bewegliche Teil des Stößels in die eingefahrene Stellung bewegt wird, wobei keine elektronische Steuerung und auch kein elektronisches Ventil notwendig sind. Der feste Teil des Stößels kann stabil an der Grundplatte montiert werden. Der bewegliche Teil des Stößels liegt an dem festen Teil des Stößels in Längsrichtung des Stößels an, wodurch eine besonders stabile Führung des beweglichen Teils des Stößels ermöglicht wird.

Der Stößel ragt insbesondere durch die Grundplatte hindurch. Das vordere Ende des beweglichen Teils des Stößels befindet sich in der eingefahrenen Stellung des beweglichen Teils des Stößels näher an der Grundplatte als in der ausgefahrenen Stellung des beweglichen Teils des Stößels. Der feste Teil des Stößels und sein beweglicher Teil liegen im ausgefahrenen Zustand des Stößels gasdicht aneinander an. Der Ruhezustand der Etikettiervorrichtung bezeichnet insbesondere den Zustand, in dem die Etikettiervorrichtung abgeschaltet ist. Im Ruhezustand ist die Aufnahmeeinrichtung insbesondere in vertikaler Richtung oberhalb einer Position angeordnet, in der sich die Aufnahmeeinrichtung bei der Abgabe eines Etiketts befindet.

Die Aufnahmeeinrichtung wird vorzugsweise durch drei Gelenkarme bewegt. Der jeweilige zweite Armabschnitt ist in Bezug auf den ersten Armabschnitt bewegbar und insbesondere aus zwei parallelen Stangen ausgebildet.

Eine erste, besonders einfach herzustellende Ausführungsform der Erfindung ist dadurch gekennzeichnet, dass die Öffnung näher an dem hinteren Ende des beweglichen Teils des Stößels, das von dessen vorderem Ende abgewandt ist, als an dessen vorderem Ende ausgebildet ist. Das hintere Ende liegt in der ausgefahrenen Stellung an dem festen Teil des Stößels an, wobei die Öffnung überdeckt wird und in dem Stößel ein Unterdruck erzeugt wird, um das Etikett aufzunehmen. Durch den Unterdruck wird das Etikett durch den Stößel angesaugt. In der eingefahrenen Stellung sind das hintere Ende und die Öffnung in Richtung der Längsachse von dem festen Teil des Stößels beabstandet, sodass Luft durch die Öffnung in den beweglichen Teil des Stößels strömt und der Unterdruck abgebaut wird, um das Etikett von dem Stößel freizugeben. Die Freigabe des Etiketts erfolgt, wenn das vordere Ende des Stößels gegen eine Verpackung stößt und die Verpackung das vordere Ende des Stößels in die Richtung der Grundplatte drückt. Das Etikett wird durch den Abbau des Unterdrucks im Stößel von diesem gelöst und an der Verpackung angebracht. Die Freigabe des Etiketts erfolgt rein mechanisch. Der bewegliche Teil des Stößels wird insbesondere durch eine Verpackung, auf der das Etikett angebracht wird, von der ausgefahrenen Stellung in die eingefahrene Stellung verschoben.

Bei weiteren vorteilhaften Ausführungsformen ist am vorderen Ende des beweglichen Teils des Stößels ein Saugkopf befestigt, der über den Stößel mit einer, vorzugsweise an der Grundplatte befestigten, Unterdruckpumpe verbunden ist. Der Saugkopf dient dazu, das Etikett anzusaugen und dadurch das Etikett am Stößel zu halten. Durch die Unterdruckpumpe wird ein Unterdruck in dem Saugkopf erzeugt. Durch die Befestigung der Unterdruckpumpe an der Grundplatte kann die Verbindung zwischen dem Saugkopf und der Unterdruckpumpe kurz und damit stabil ausgestaltet werden. Beim Anbringen des Etiketts auf einer Verpackung wird der Saugkopf auf die Verpackung gedrückt. Insbesondere wird das vordere Ende des beweglichen Teils des Stößels durch die Verpackung gleichzeitig in Richtung der Grundplatte verschoben, sodass der Verpackung kein Schaden zugefügt wird. Ein Luftschlauch zwischen dem Stößel und der Unterdruckpumpe zum Absaugen der Luft muss nur mit dem beweglichen Teil des Stößels zwischen der eingefahrenen und der ausgefahrenen Stellung bewegbar sein. In Bezug auf den beweglichen Teil des Stößels ist der Luftschlauch in axialer Richtung nicht verschiebbar. Eine komplexe Luftführung ist daher nicht notwendig.

Eine bevorzugte Ausführungsform der Etikettiervorrichtung ist dadurch gekennzeichnet, dass der bewegliche Teil und/oder der feste Teil des Stößels rohrförmig ausgebildet ist. Der Stößel ist insbesondere zylinderförmig mit einer größeren Länge in Richtung der Längsachse des Stößels als seiner Breite ausgebildet. Der bewegliche Teil des Stößels ist insbesondere im festen Teil des Stößels geführt, vorzugsweise teleskopartig. Der feste Teil des Stößels liegt an dem beweglichen Teil entlang des Umfangs des beweglichen Teils an. Der bewegliche Teil des Stößels ist besonders stabil im festen Teil geführt.

Bei einer weiteren bevorzugtenAusführungsform ist der bewegliche Teil des Stößels durch ein Federelement im unbelasteten Zustand in der ausgefahrenen Stellung gehalten. Der bewegliche Teil des Stößels wird gegen die Federkraft von der ausgefahrenen Stellung in die eingefahrene Stellung überführt und ohne äußere Krafteinwirkung stabil in der ausgefahrenen Stellung gehalten oder von der eingefahrenen Stellung elastisch in die ausgefahrene Stellung zurückgeführt. Beim Aufbringen eines Etiketts auf eine Verpackung wird das vordere Ende des beweglichen Teils des Stößels in Richtung der Grundplatte durch die Verpackung gegen die Federkraft verschoben, sodass die Verpackung nicht beschädigt wird. Das Federelement ist insbesondere zwischen dem beweglichen Teil des Stößels und dem festen Teil des Stößels oder der Grundplatte angeordnet.

Die Etikettiervorrichtung ist bei einer weiteren vorteilhaften Ausgestaltung dadurch gekennzeichnet, dass der bewegliche Teil und/oder der feste Teil des Stößels gegenüber der Grundplatte um die Längsachse des Stößels drehbar gelagert, vorzugsweise mittels eines Drehmotors bewegbar ist. Der bewegliche Teil und/oder der feste Teil des Stößels ist insbesondere in einem Drehlager in der Grundplatte angeordnet. In einer bevorzugten Variante ist der feste Teil unbeweglich an der Grundplatte befestigt, wobei der bewegliche Teil drehbar im festen Teil gelagert ist. Die drehbare Lagerung des Stößels dient der Ausrichtung des am vorderen Ende des beweglichen Teils des Stößels angesaugten Etiketts beim Aufbringen des Etiketts auf einer Verpackung. Für Ausführungsformen, bei denen der Drehmotor zur Drehung des Stößels an der Grundplatte ausgebildet ist, ist insbesondere ein vergleichsweise einfaches Getriebe zur Drehung des Stößels ausreichend.

Eine Klasse von vorteilhaften Ausführungsformen zeichnet sich dadurch aus, dass am hinteren Ende des beweglichen Teils des Stößels, das von dem vorderen Ende des beweglichen Teils des Stößels abgewandt ist, ein Permanentmagnet befestigt ist, wobei die Aufnahmeeinrichtung einen Hall-Sensor zum Messen des Magnetfeldes des Permanentmagneten aufweist, und wobei der Hall-Sensor mit einer Steuereinheit zur Detektion einer Verschiebung des beweglichen Teils des Stößels verbunden ist. Der Hall Sensor dient der Messung der Bewegung des Permanentmagneten durch die Veränderung des Magnetfeldes, die durch diese Bewegung verursacht wird. Damit wird die Bewegung des hinteren Endes des beweglichen Teils des Stößels gemessen, da der Permanentmagnet an dem hinteren Ende befestigt ist. Dadurch kann gemessen werden, ob der bewegliche Teil sich gegen eine Verpackung bewegt hat. Denn die Verpackung drückt den beweglichen Teil in die Gegenrichtung zu der Bewegung des Gelenkarms beim Anbringen der Etiketten, sodass sich der bewegliche Teil des Stößels relativ zu dem festen Teil des Stößels in die Gegenrichtung zu der Bewegung der Aufnahmeeinrichtung oder Aufnahmevorrichtung beim Anbringen des Etiketts an der Verpackung verschiebt. Die Steuerung beendet dann insbesondere eine Bewegung des Gelenkarms in Richtung der Verpackung beim Aufbringen eines Etiketts oder in Richtung des Etiketts beim Aufnehmen desselben von einem Etikettendrucker, vorzugsweise nach unten. Anschließend bewegt die Steuerung den Gelenkarm in die Gegenrichtung, um das Etikett zu der Verpackung zu befördern oder ein neues Etikett aufzunehmen.

Bei einer Weiterbildung der vorgenannten Ausführungsformen sind der Hall-Sensor und der Permanentmagnet in der ausgefahrenen Stellung des beweglichen Teils des Stößels in Bezug auf die Grundplatte auf gleicher Höhe angeordnet. Durch die räumliche Nähe des Permanentmagneten und des Hall-Sensors ist das durch den Permanentmagneten erzeugte Magnetfeld am Ort des Hall-Sensors vergleichsweise stark und lässt sich gut detektieren. Wenn der Hall-Sensor durch eine Veränderung des Magnetfeldes erkennt, dass der Magnet nicht mehr auf Höhe des Hall Sensors ist, so gibt der Hall Sensor an eine Steuereinheit ein Signal, dass der Stößel gegen eine Verpackung getroffen ist. Dann gibt die Steuerung das Signal an den Gelenkarm, eine Bewegung weg von der Verpackung durchzuführen.

Bei einer weiteren Klasse von bevorzugten Ausführungsformen ist die Roboterbasis mit der Plattform durch ein Rückholelement zum mechanischen Rücktransport der Aufnahmeeinrichtung entgegen der Schwerkraft in ihre Ausgangsposition im Ruhezustand des Roboters verbunden. Das Rückholelement unterstützt die Motoren bei einer Rückbewegung der Gelenkarme nach oben, um den jeweiligen Gelenkarm von der Verpackung zu entfernen, nachdem das Etikett an der Verpackung angebracht wurde. Dadurch werden die Motoren bei einer Bewegung der Gelenkarme gegen die Schwerkraft weniger belastet.

Weiterbildungen dieser Ausführungsformen zeichnen sich dadurch aus, dass das Rückholelement ein elastisches Spannseil aufweist, insbesondere aus Gummi oder Latex. Bei einer Bewegung der Gelenkarme zum Anbringen der Etiketten wird das elastische Seil angespannt. Diese Bewegung erfolgt insbesondere nach unten, in Richtung der Schwerkraft, unter Ausnutzung des Eigengewichts der Aufnahmeeinrichtung. Die Rückholbewegung erfolgt unter Entspannung des zuvor angespannten elastischen Seils, insbesondere entgegen der Schwerkraft, sodass die Federkraft des angespannten elastischen Seils die Arbeit der Motoren unterstützt. Wenn die Aufnahmeeinrichtung bei einem Kurzschluss frei fällt, insbesondere auf eine Heißsiegelplatte zur Verklebung einer Verpackungsfolie der Verpackung, wirkt das elastische Spannseil dem freien Fall entgegen, sodass ein Schaden vermieden wird.

Das Rückholelement weist somit eine Schutzfunktion für die Aufnahmeeinrichtung auf.

Eine besonders vorteilhafte Ausgestaltung der vorgenannten Weiterbildungen ist dadurch gekennzeichnet, dass ein Stromkabel zur Versorgung der Aufnahmeeinrichtung mit Strom an dem Spannseil geführt ist. Das Stromkabel ist insbesondere aufgewickelt. Es hat insbesondere die Gestalt einer Telefonschnur. Dadurch ist das Stromkabel in Richtung der Längsachse des Spannseils in seiner Länge variabel veränderbar.

Eine weitere Klasse von Ausführungsformen der Etikettiervorrichtung ist dadurch gekennzeichnet, dass jeweils der zweite Armabschnitt der Gelenkarme ein erstes und/oder zweites Ende mit einer Lasche mit einer, insbesondere kreisförmigen, nach außen geschlitzten Durchgangsaufnahme zum Halten eines kugelförmigen Schraubenkopfs aufweisen. Der zweite Armabschnitt verbindet insbesondere den ersten Armabschnitt mit der Aufnahmeeinrichtung. Die Durchgangsausnehmung der Lasche wird durch einen Innenradius der Lasche gebildet, welcher keine zylindrische, sondern eine reziprok-kugelige Geometrie aufweist. Bei Einführung eines kugelförmigen Schraubkopfes oder eines Schraubenkopfs in die Lasche wird die Lasche insbesondere auseinandergedrückt. Die Lasche klemmt den kugelförmigen Schraubkopf nach der Einführung ein, sodass dieser nicht seitlich herausrutschen kann. Insbesondere bilden die Schenkel der Lasche auf beiden Seiten der geschlitzten Durchgangsaufnahme eine Halterung, wobei die Schenkel vergleichsweise leicht auseinandergedrückt werden können. Die jeweilige Schraube ist insbesondere in der Aufnahmeeinrichtung und/oder dem ersten Armabschnitt befestigt. Die zweiten Armabschnitte sind von dem ersten Armabschnitt und/oder der Aufnahmeeinrichtung zerstörungsfrei lösbar, insbesondere bei einer Fehlfunktion der Etikettiervorrichtung.

Weiterbildungen dieser Klasse von Ausführungsformen sind dadurch gekennzeichnet, dass kugelförmige Schraubköpfe in die Laschen an den Enden des ersten und/oder zweiten Armabschnitts zur Verbindung der Armabschnitte untereinander und/oder mit der Plattform und/oder mit der Roboterbasis eingeführt sind, wobei die Laschen die kugelförmigen Schraubköpfe kraftschlüssig, gegebenenfalls auch formschlüssig umklammern. Die Plattform und die Roboterbasis sind in Bezug auf den ersten und oder zweiten Armabschnitt im dreidimensionalen Raum drehbar. Dadurch können die Plattform und die Roboterbasis besser ausgerichtet werden. Außerdem wird auf diese Weise eine Fertigung mit etwas großzügigeren Toleranzen ermöglicht.

Bevorzugt ist der jeweilige erste und/oder zweite Armabschnitt der Gelenkarme als Carbon-Stab ausgebildet. Dadurch sind die Armabschnitte bei vergleichsweise geringem Gewicht besonders stabil ausgebildet.

Eine weitere vorteilhafte Ausgestaltung der Erfindung schließlich ist dadurch gekennzeichnet, dass die Enden der ersten und/oder zweiten Armabschnitte der Gelenkarme mit den Laschen zumindest teilweise aus Kunststoffmaterial mit guten Gleiteigenschaften, insbesondere aus Basispolymeren, Fasern und Füllstoffen sowie Festschmierstoffen, vorzugsweise aus iglidur^{®}, gefertigt sind. Dadurch wird eine reibungsfreie Bewegung der Gelenkarme ermöglicht. Der Werkstoff iglidur^{®} verringert im Betrieb den Verschleiß an den Enden der Armabschnitte.

Weitere Merkmale und Vorteile der Erfindung ergeben sich aus der nachfolgenden detaillierten Beschreibung von Ausführungsbeispielen der Erfindung anhand der Figuren der Zeichnung, die erfindungswesentliche Einzelheiten zeigt, sowie aus den Ansprüchen. Die einzelnen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt, welche in der nachfolgenden Beschreibung näher erläutert werden.

Es zeigen:
- Fig. 1: eine isometrische Ansicht einer Verpackungsmaschine mit einer erfindungsgemäßen Etikettiervorrichtung;
- Fig. 2: eine Seitenansicht der erfindungsgemäßen Etikettiervorrichtung;
- Fig. 3a: eine erste Seitenansicht einer Aufnahmeeinrichtung der Etikettiervorrichtung mit einem Stößel in einer ausgefahrenen Stellung;
- Fig. 3b: eine zweite Seitenansicht der Aufnahmeeinrichtung mit dem Stößel in der ausgefahrenen Stellung;
- Fig. 3c: eine Seitenansicht der Aufnahmeeinrichtung der Etikettiervorrichtung mit dem Stößel in einer eingefahrenen Stellung;
- Fig. 4a: eine Seitenansicht des Stößels in der eingefahrenen Stellung;
- Fig. 4b: eine isometrische Ansicht des Stößels in der eingefahrenen Stellung;
- Fig. 4c: einen Querschnitt durch den Stößel;
- Fig. 4d: eine Seitenansicht des Stößels in der ausgefahrenen Stellung;
- Fig. 5a: eine isometrische Ansicht eines Spannseils einer Rückholvorrichtung der erfindungsgemäßen Etikettiervorrichtung;
- Fig. 5b: eine isometrische Ansicht des Spannseils mit einem Strom kabel;
- Fig. 5c: eine isometrische Ansicht einer Rückholvorrichtung der Etikettiervorrichtung;
- Fig. 6a: eine Explosionsdarstellung eines Gelenkarms der Etikettiervorrichtung; und
- Fig. 6b: den mit einer Roboterbasis und der Aufnahmevorrichtung verbundenen Gelenkarm.

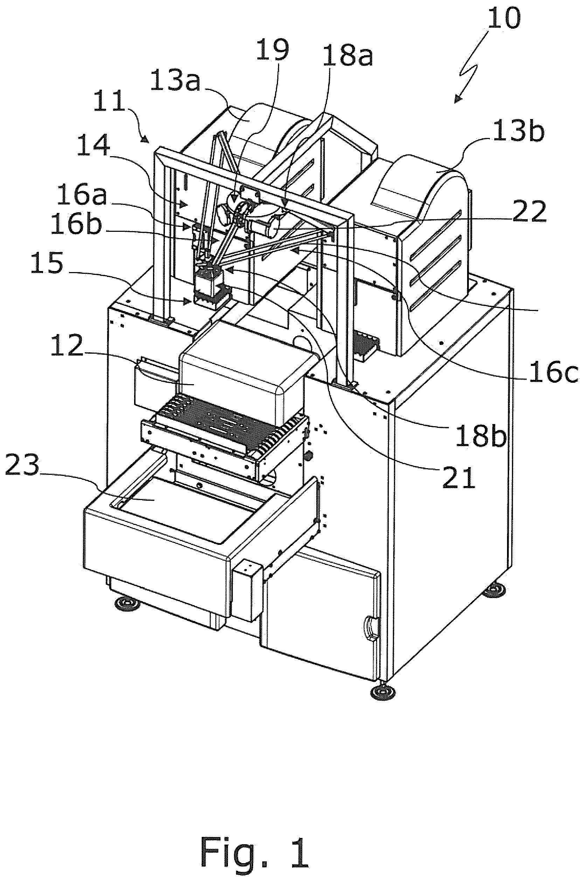

**Fig.** 1 zeigt eine Dehnfolienverpackungsmaschine **10** mit einer Etikettiervorrichtung **11** zum Aufbringen eines (in der Zeichnung nicht eigens dargestellten) Etiketts auf eine Ware **12.** Die Etikettiervorrichtung 11 ist an zwei Druckern **13a, 13b** zum Bedrucken der Etiketten angeordnet. Ein Roboter **14** der Etikettiervorrichtung 11 mit einer Delta-Kinematik dient dem Transport des Etiketts von einer Spendeeinrichtung **15** des Druckers 13a zu der Ware 12. Der Roboter weist drei Gelenkarme **16a, 16b, 16c** auf. Die Gelenkarme 16a - 16c sind jeweils an einem ersten Ende **18a** mit einer Roboterbasis **19** und an einem zweiten Ende **18b** mit einer Aufnahmeeinrichtung **21** verbunden, die in einer in Fig. 1 gezeigten Aufnahmeposition das Etikett von der Spendeeinrichtung 15 des Druckers 13a übernimmt. Eine Wägeeinrichtung **23** der Dehnfolienverpackungsmaschine 10 dient dem Wiegen der Ware 12.

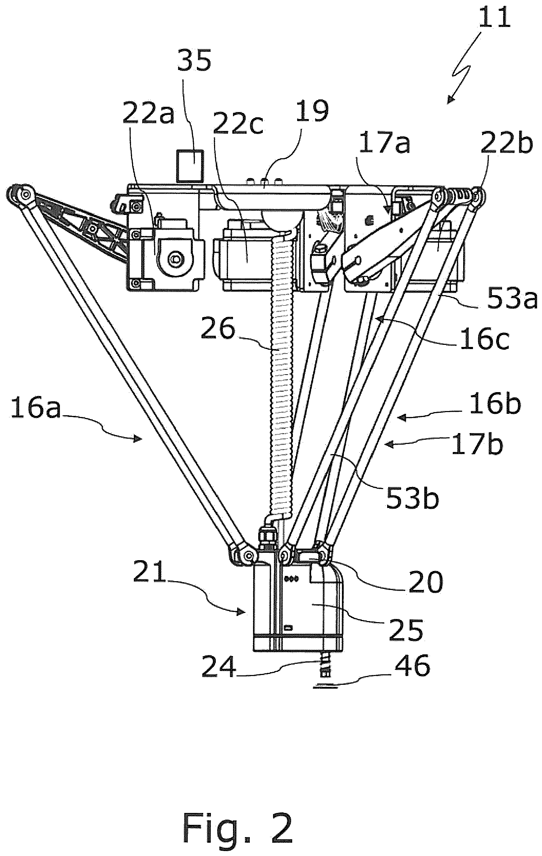

**Fig. 2** zeigt eine Seitenansicht der Etikettiervorrichtung 11 mit der Roboterbasis 19, der Aufnahmeeinrichtung 21 und den Gelenkarmen 16a - 16c, die diese verbinden. Dabei sind die Gelenkarme 16a - 16c an einer Plattform **20** der Aufnahmeeinrichtung 21 befestigt. Die Gelenkarme weisen erste und zweite Armabschnitte **17a, 17b** auf, welche gelenkig miteinander verbunden sind. Der zweite Armabschnitt weist zwei parallel angeordnete Stäbe **53a, 53b** auf. Die Gelenkarme 16a - 16c an der Roboterbasis 19 sind um eine jeweilige Rotationsachse schwenkbar und jeweils von einem fest an der Roboterbasis 19 angebrachten Motor **22a, 22b, 22c** angetrieben. Die Aufnahmeeinrichtung 21 weist einen Stößel **24** zur Aufnahme des Etiketts auf, der aus einem Schutzgehäuse **25** der Aufnahmeeinrichtung 21 nach unten, in Richtung der Schwerkraft, hinausragt. An dem Stößel 24 ist ein Saugkopf **46** zum Ansaugen von Etiketten befestigt. Die Roboterbasis 19 ist mit der Plattform 20 durch ein Rückholelement **26** zum mechanischen Rücktransport der Aufnahmeeinrichtung 21 entgegen der Schwerkraft in ihre Ausgangsposition im Ruhezustand des Roboters 14 verbunden. Die Roboterbasis umfasst eine Steuereinheit **35** zum Steuern des Roboters 14,

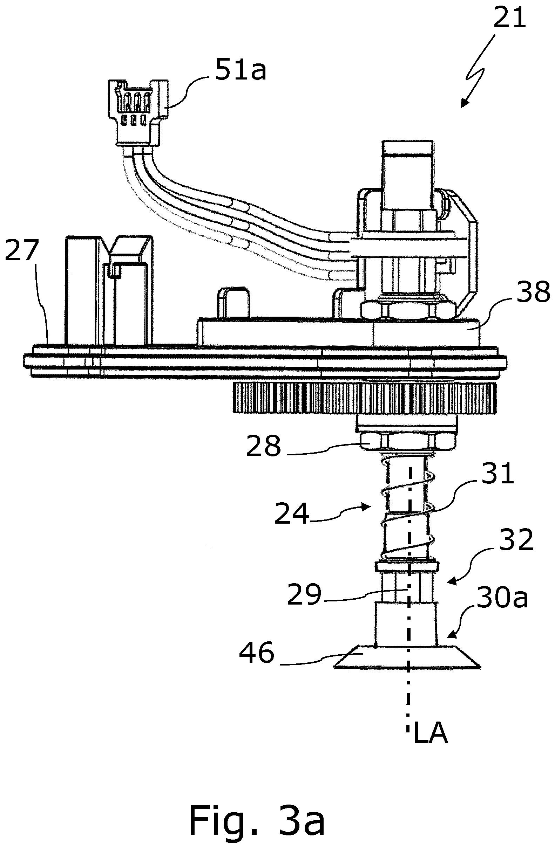

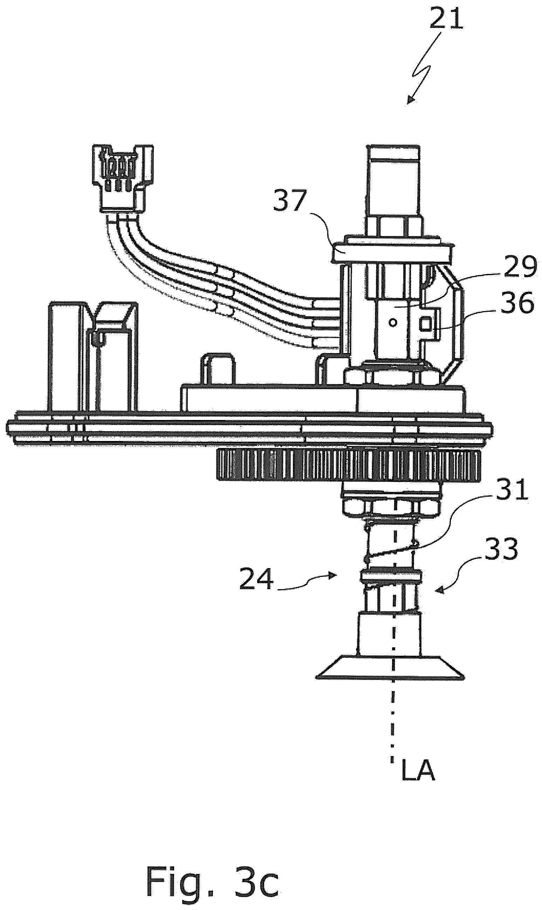

**Fig. 3a** zeigt eine erste Seitenansicht der Aufnahmeeinrichtung 21 ohne das Schutzgehäuse 25 (siehe Fig. 2). Der Stößel 24 umfasst einen an einer Grundplatte **27** montierten und in Bezug auf die Grundplatte 27 in Längsrichtung **LA** des Stößels 24 nicht-verschiebbaren festen Teil **28** und einen in Längsrichtung LA des Stößels 24 in dem festen Teil 28 beweglichen Teil **29** des Stößels 24 mit einem vorderen Ende **30a,** an dem der Saugkopf 46 zur Aufnahme des Etiketts befestigt ist. Dabei ragt der Stößel 24 durch die Grundplatte 27 der Aufnahmeeinrichtung 21 hindurch. Der bewegliche Teil 29 des Stößels 24 ist durch ein Federelement **31** im unbelasteten Zustand in einer ausgefahrenen Stellung **32** gehalten, in der das vordere Ende 30a des Stößels 24 zur Aufnahme des Etiketts weiter von der Grundplatte 27 entfernt ist als in einer eingefahrenen Stellung **33** (siehe Fig. 3c). Gebündelte Anschlüsse **51a** dienen der Verbindung von Sensoren (wiederum nicht eigens dargestellt) der Aufnahmeeinrichtung 21 mit der Steuereinheit 35 (siehe Fig. 2). Der bewegliche Teil 29 des Stößels 24 ist in Richtung der Längsachse LA des Stößels 24 durch den festen Teil 28 des Stößels 24 hindurch in Richtung auf die Grundplatte 27 in eine eingefahrene Stellung 33 verschiebbar. Ein Drehmotor **38** an der Grundplatte 27 dient der Drehung des beweglichen Teils 29 des Stößels 24 um seine Längsachse LA.

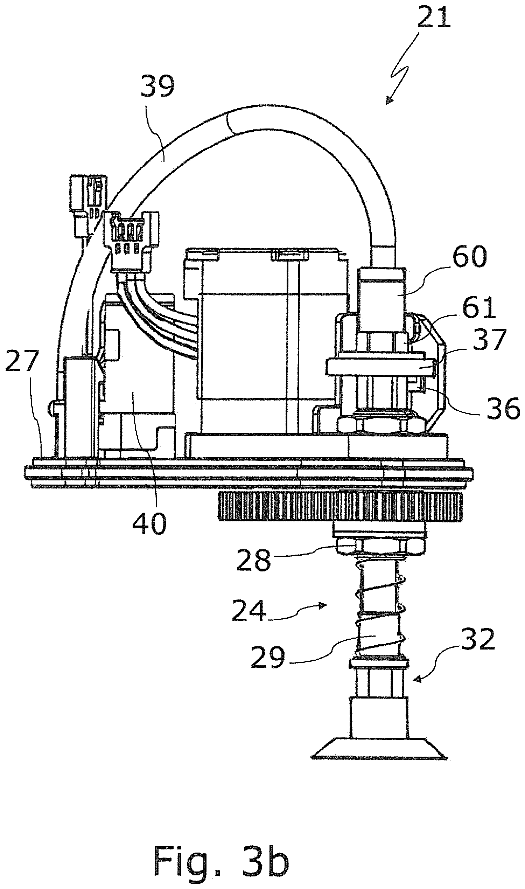

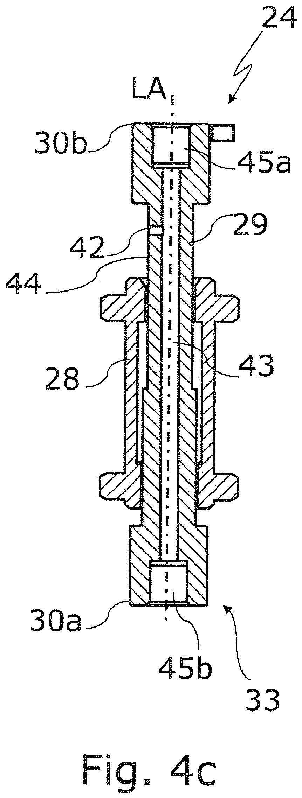

**Fig. 3b** zeigt eine zweite, detailliertere Seitenansicht der Aufnahmeeinrichtung 21 mit dem Stößel 24 in der ausgefahrenen Stellung 32. Insbesondere ist ein Luftschlauch **39** dargestellt, der eine Verbindung zwischen einer an der Grundplatte 27 angeordneten Unterdruckpumpe **40** und dem Stößel 24 herstellt. Durch den Luftschlauch 39 wird Luft aus dem Stößel 24 gesaugt, um in dem Stößel 24 einen Unterdruck zum Ansaugen des Etiketts zu erzeugen. An dem festen Teil 28 des Stößels 24 befindet sich ein Hall-Sensor **36,** um eine Änderung eines Magnetfeldes eines Permanentmagneten **37** an dem beweglichen Teil 29 des Stößels 24 (siehe Fig. 4c) und damit eine Bewegung des beweglichen Teils 29 des Stößels 24 zu messen. Der Hall-Sensor 36 ist mit der Steuereinheit 35 (siehe Fig. 2) zur Anzeige einer Verschiebung des beweglichen Teils 29 des Stößels 24 verbunden. Der Luftschlauch 39 ist über einen Anschluss **60** mit dem Stößel verbunden. Eine Mutter **61** dient dem Halten des Anschlusses 60 in seiner Position.

**Fig. 3c** zeigt eine Seitenansicht der Aufnahmeeinrichtung 21 mit dem Stößel 24 in der eingefahrenen Stellung 33. Das Federelement 31 ist in der eingefahrenen Stellung 33 gespannt. Der Permanentmagnet 37 ist von dem Hall-Sensor 36 in axialer Richtung entlang der Längsachse LA des Stößels 24 beabstandet.

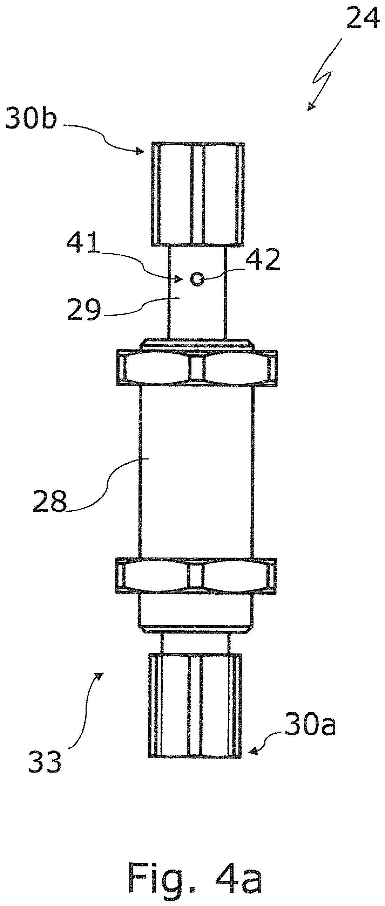

**Fig. 4a** zeigt eine Seitenansicht des Stößels 24 mit dem in dem festen Teil 28 des Stößels 24 beweglichen Teil 29 des Stößels 24 in der eingefahrenen Stellung 33.

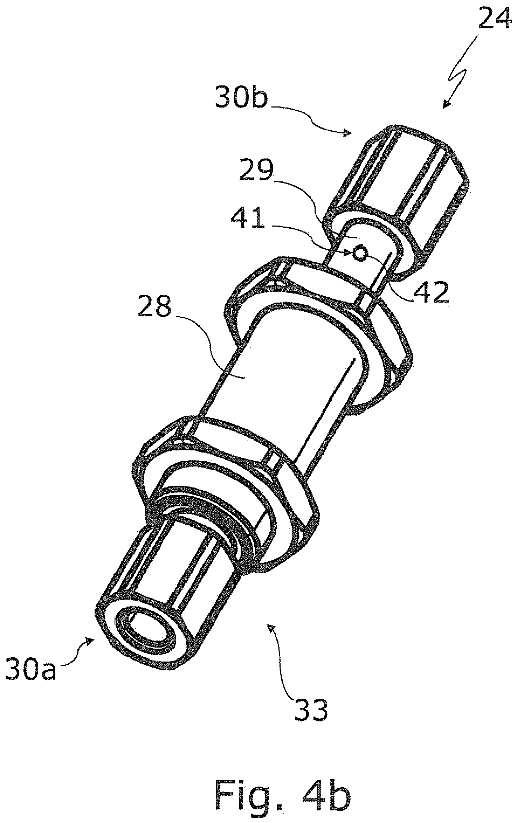

**Fig. 4b** zeigt eine entsprechende isometrische Ansicht des Stößels 24 in der eingefahrenen Stellung 33. Der bewegliche Teil 29 und der feste Teil 28 des Stößels 24 sind zylinderfömig als Rohr ausgebildet. Der Stößel 24 weist einen mechanischen Druckregler **41** zur Unterbrechung eines zur Aufnahme des Etiketts dienenden Unterdrucks im Stößel 24 auf. Der mechanische Druckregler 41 umfasst insbesondere eine Öffnung **42** in dem beweglichen Teil 29 des Stößels 24. Die Öffnung 42 ist näher an einem hinteren Ende **30b** des beweglichen Teils 29 des Stößels 24, das von dessen vorderem Ende 30a abgewandt ist, als an dessen vorderem Ende 30a ausgebildet. Dabei ist die Öffnung 42 in der gezeigten eingefahrenen Stellung 33 des beweglichen Teils 29 des Stößels 24 durch den festen Teil 28 des Stößels 24 nicht überdeckt.

**Fig. 4c** zeigt einen Querschnitt durch den Stößel 24 mit der Öffnung 42 in dem beweglichen Teil 29, der in dem festen Teil 28 des Stößels 24 axial beweglich gelagert ist. Der bewegliche Teil 29 befindet sich in der eingefahrenen Stellung 33. Der bewegliche Teil 29 des Stößels 24 weist einen Hohlraum **43** auf, der sich entlang der Längsachse LA des Stößels 24 von dem hinteren Ende 30b des beweglichen Teils 29 des Stößels 24 zu dem vorderen Ende 30a des Stößels 24 erstreckt. Die Öffnung 24 erstreckt sich von der Außenfläche **44** des beweglichen Teils 29 zu dem Hohlraum 43. Wenn die Öffnung 24 in der ausgefahrenen Stellung 32 des beweglichen Teils 29 des Stößels 24 von dem festen Teil 28 des Stößels 24 überdeckt ist, kann durch Absaugen der Luft aus dem Hohlraum 43 darin ein Unterdruck erzeugt werden, um ein Etikett an das vordere Ende 30a des Stößels 24 anzusaugen. Der Hohlraum 43 hat an dem hinteren Ende 30b eine hintere Aufnahme **45a** für den Luftschlauch 39 (siehe Fig. 3b) und an dem vorderen Ende 30a eine vordere Aufnahme **45b** für den Saugkopf 46 (siehe Fig. 2) zum Ansaugen des Etiketts. Am hinteren Ende 30b des beweglichen Teils 29 des Stößels 24 ist ein Permanentmagnet **37** befestigt, dessen Magnetfeld von einem Hall-Sensor 36 (siehe Fig. 3a) gemessen wird. Der Permanentmagnet 37 ist ringförmig, so dass er in jeder Drehstellung am Hallsensor 36 ausgerichtet ist.

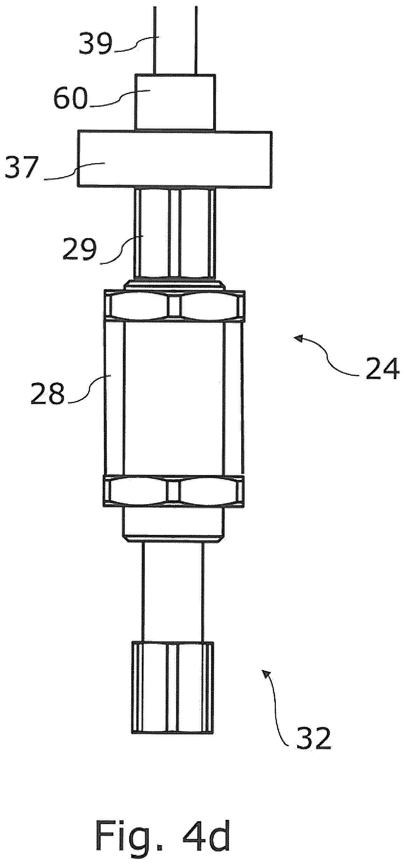

**Fig. 4d** zeigt eine Seitenansicht des Stößels 24 in der ausgefahrenen Stellung 32. Die Öffnung 42 (siehe Fig. 4a) im beweglichen Teil 29 des Stößels 24 ist in der ausgefahrenen Stellung 32 des beweglichen Teils 29 des Stößels 24 zur Aufnahme des Etiketts durch den festen Teil 28 des Stößels 24 gasdicht überdeckt. Dadurch kann ein Unterdruck im Stößel 24 erzeugt werden.

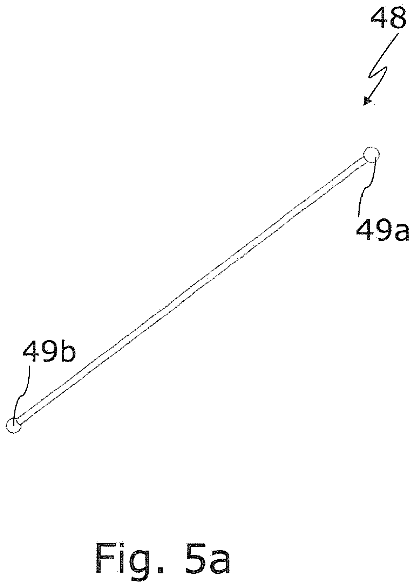

**Fig. 5a** zeigt eine isometrische Ansicht eines elastischen Spannseils **48** des Rückholelements 26 (siehe Fig. 2) oder der Rückholvorrichtung, welches insbesondere aus Gummi oder Latex hergestellt ist. Das Spannseil 48 oder der Spannriemen weist an beiden Enden kugelförmige Seilhalter **49a, 49b** auf, mit denen das Spannseil 48 an der Aufnahmeeinrichtung 21 und an der Roboterbasis 19 befestigt ist (siehe Fig. 2).

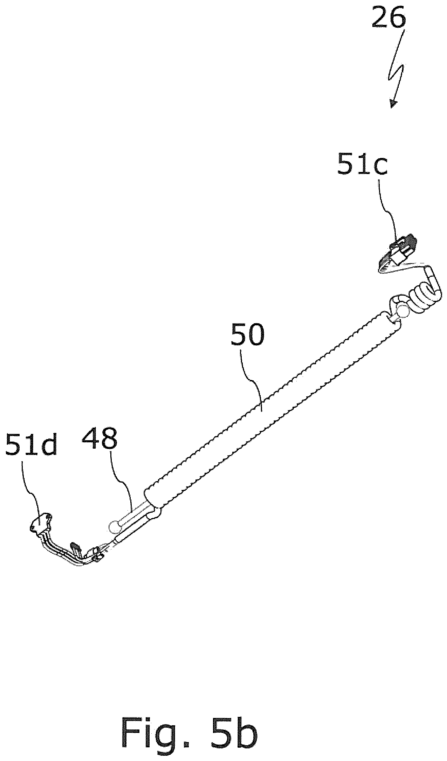

**Fig. 5b** zeigt eine isometrische Ansicht des Rückholelements 26 mit dem Spannseil 48, wobei ein Stromkabel **50** um das Spannseil 48 gewickelt ist, insbesondere in einer Schraubenlinie. Das Stromkabel 50 versorgt die Aufnahmeeinrichtung 21 (siehe Fig. 1) über Anschlüsse **51c, 51d** mit Daten und Strom.

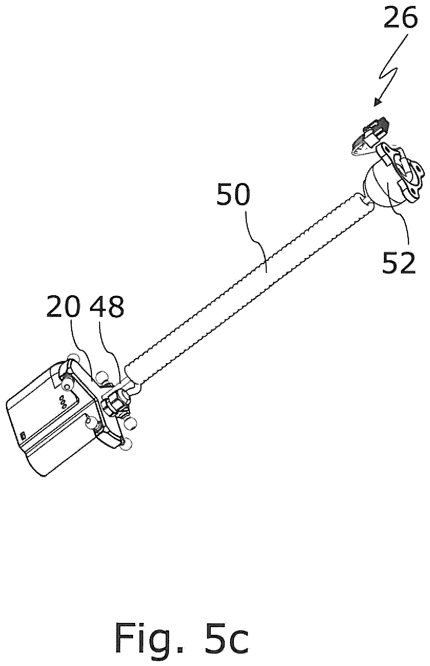

**Fig. 5c** zeigt eine isometrische Ansicht des Rückholelements **26** mit dem Spannseil 48 und dem Stromkabel 50. Das Spannseil 48 ist an der Plattform 20 der Aufnahmeeinrichtung 21 (siehe Fig. 2) und an einem Befestigungselement **52** der Roboterbasis 19 (siehe Fig. 2) befestigt.

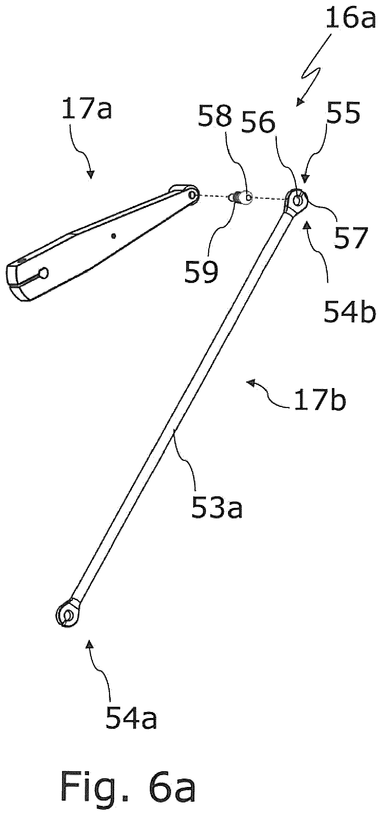

**Fig. 6a** zeigt eine Explosionsdarstellung einer der Gelenkarme 16a - 16c -hier beispielhaft des Gelenkarms 16a- der Etikettiervorrichtung 11 (siehe Fig. 2) mit dem ersten und zweiten Armabschnitt 17a, 17b. Von den zwei parallel geführten Stäben 53a, 53b des zweiten Armabschnitts 17b ist hier beispielhaft der Stab 53a gezeigt. Der zweite Armabschnitt 17b des Gelenkarms 16a weist ein erstes und/oder zweites Ende **54a, 54b** mit jeweils einer Lasche **55** auf. Die Lasche 55 weist eine kreisförmige Durchgangsaufnahme **56** mit einem nach außen gerichteten Schlitz **57** zum Halten eines kugelförmigen Schraubenkopfs **58** auf. Die Schraube **59** mit dem Schraubenkopf 58 wird in den ersten Armabschnitt 17a eingeschraubt, um den ersten und zweiten Armabschnitt 17a, 17b gelenkig und drehbeweglich zu verbinden.

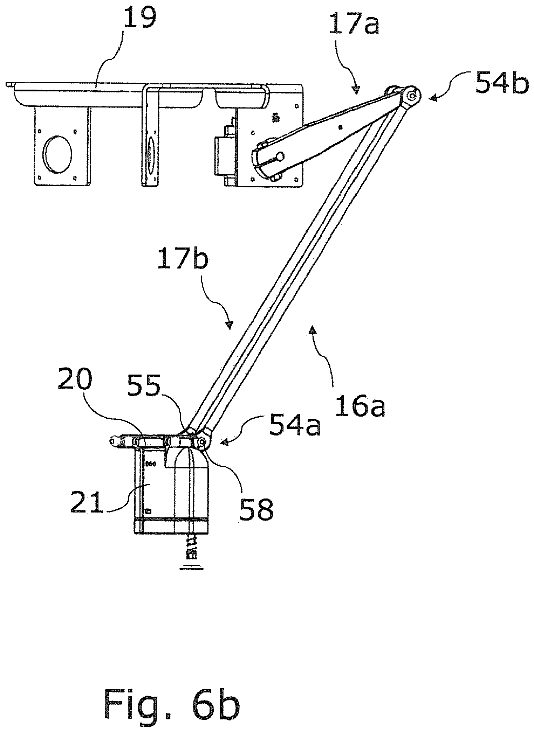

**Fig. 6b** schließlich zeigt den mit einer Roboterbasis 19 und der Aufnahmeeinrichtung 21 verbundenen Gelenkarm 16a. Kugelförmige Schraubköpfe 58 sind in die Laschen 55 an den Enden 54a, 54b des zweiten Armabschnitts 17b eingeführt. Die Schrauben 59 (siehe Fig. 6a) mit den Schraubenköpfen 58 sind in der Plattform 20 der Aufnahmeeinrichtung 21 und in dem ersten Armabschnitt 17a eingeschraubt, um diese mit dem zweiten Armabschnitt 17b zu verbinden. Die Laschen 55 umklammern die kugelförmigen Schraubenköpfe 58 kraftschlüssig, gegebenenfalls auch formschlüssig. Die Durchgangsausnehmungen der Laschen 55 werden durch einen Innenradius gebildet, welcher eine reziprok-kugelige Geometrie aufweist.

Bei Einführung eines kugelförmigen Schraubkopfes wird die Lasche auseinandergedrückt und klemmt dann den Schraubkopf ein, sodass dieser nicht seitlich aus der Lasche herausrutschen kann.

### Bezugszeichen liste

- 10: Dehnfolienverpackungsmaschine
- 11: Etikettiervorrichtung
- 12: Ware
- 13a,b: Drucker
- 14: Roboter
- 15: Spendeeinrichtung
- 16a-c: Gelenkarme
- 17a,b: Armabschnitte
- 18a,b: Enden der Gelenkarme
- 19: Roboterbasis
- 20: Plattform
- 21: Aufnahmeeinrichtung
- 22a-c: Motor
- 23: Wägeeinrichtung
- 24: Stößel
- 25: Schutzgehäuse
- 26: Rückholelement
- 27: Grundplatte
- 28: fester Teil des Stößels
- 29: beweglicher Teil des Stößels
- 30a,b: Enden des beweglichen Teils des Stößels
- 31: Federelement
- 32: ausgefahrene Stellung des Stößels
- 33: eingefahrene Stellung des Stößels
- 34: Stromkabel
- 35: Steuereinheit
- 36: Hall-Sensor
- 37: Permanentmagnet
- 38: Drehmotor
- 39: Luftschlauch
- 40: Unterdruckpumpe
- 41: mechanischer Druckregler
- 42: Öffnung
- 43: Hohlraum
- 44: Außenfläche
- 45a,b: Aufnahmen
- 46: Saugkopf
- 48: elastisches Spannseil
- 49a,b: kugelförmige Seilhalter
- 50: Stromkabel
- 51a,b: Anschlüsse
- 52: Befestigungselement
- 53a,b: parallel geführte Stäbe
- 54a,b: Enden des zweiten Abschnitts des Gelenkarms
- 55: Lasche
- 56: kreisförmige Durchgangsaufnahme
- 57: Schlitz
- 58: Schraubenkopf
- 59: Schraube
- 60: Anschluss des Luftschlauchs
- 61: Mutter

- LA: Längsachse/Längsrichtung des Stößels

## Patentansprüche

1. Etikettiervorrichtung (11) für eine Dehnfolienverpackungsmaschine (10), umfassend einen Roboter (14) mit Delta-Kinematik, mit wenigstens zwei Gelenkarmen (16a - 16c), die jeweils einen ersten und einen zweiten Armabschnitt (17a, 17b) aufweisen, welche gelenkig miteinander verbunden sind, wobei die Gelenkarme (17a, 17b) jeweils an einem ersten Ende (54a) mit einer Roboterbasis (19) und an einem zweiten Ende (54b) mit einer Plattform (20) einer zu bewegenden Aufnahmeeinrichtung (21) zur Aufnahme eines Etiketts gelenkig verbunden sind, und wobei die Gelenkarme (17a, 17b) an der Roboterbasis (19) um eine jeweilige Rotationsachse schwenkbar und jeweils von einem fest an der Roboterbasis (19) angebrachten Motor (22a - 22c) angetrieben sind,
**dadurch gekennzeichnet,**
**dass** die Aufnahmeeinrichtung (21) eine Grundplatte (27) und einen Stößel (24) zur Aufnahme des Etiketts aufweist,
**dass** der Stößel (24) einen an der Grundplatte (27) montierten und in Bezug auf die Grundplatte (27) in Längsrichtung (LA) des Stößels (24) nicht-verschiebbaren festen Teil (28) und einen in Längsrichtung (LA) des Stößels (24) in dem festen Teil (28) beweglichen Teil (29) des Stößels (24) mit einem vorderen Ende (30a) zur Aufnahme eines Etiketts umfasst,
**dass** der Stößel (24) einen mechanischen Druckregler (41) zur Unterbrechung eines zur Aufnahme des Etiketts dienenden Unterdrucks im Stößel (24) aufweist,
und **dass** der bewegliche Teil (29) des Stößels (24) in Richtung der Längsachse (LA) des Stößels (24) durch den festen Teil (28) des Stößels (24) hindurch in Richtung auf die Grundplatte (27) in eine eingefahrene Stellung (33) verschiebbar ist, wobei der bewegliche Teil (29) des Stößels (24) eine Öffnung (42) aufweist, wobei die Öffnung (42) in einer ausgefahrenen Stellung (32) des beweglichen Teils (29) des Stößels (24) zur Aufnahme des Etiketts durch den festen Teil (28) des Stößels (24) gasdicht überdeckt ist und in der eingefahrenen Stellung (33) des beweglichen Teils (29) des Stößels (24) durch den festen Teil (28) des Stößels (24) nicht überdeckt ist.

2. Etikettiervorrichtung nach Anspruch 1, **dadurch gekennzeichnet, dass** die Öffnung (42) näher an dem hinteren Ende (30b) des beweglichen Teils (29) des Stößels (24), das von dessen vorderem Ende (30a) abgewandt ist, als an dessen vorderem Ende (30a) ausgebildet ist.

3. Etikettiervorrichtung nach einem der vorhergehenden Ansprüche, **dadurch gekennzeichnet, dass** an dem vorderen Ende (30a) des beweglichen Teils (29) des Stößels (24) ein Saugkopf (46) befestigt ist, der über den Stößel (24) mit einer, vorzugsweise an der Grundplatte (27) befestigten, Unterdruckpumpe (40) verbunden ist.

4. Etikettiervorrichtung nach einem der vorhergehenden Ansprüche, **dadurch gekennzeichnet, dass** der bewegliche Teil (29) und/oder der feste Teil (28) des Stößels (24) rohrförmig ausgebildet ist.

5. Etikettiervorrichtung nach einem der vorhergehenden Ansprüche, **dadurch gekennzeichnet, dass** der bewegliche Teil (29) des Stößels (24) durch ein Federelement (31) im unbelasteten Zustand in der ausgefahrenen Stellung (32) gehalten ist.

6. Etikettiervorrichtung nach einem der vorhergehenden Ansprüche, **dadurch gekennzeichnet, dass** der bewegliche Teil (29) und/oder der feste Teil (28) des Stößels (24) gegenüber der Grundplatte (27) um die Längsachse (LA) des Stößels (24) drehbar gelagert, vorzugsweise mittels eines Drehmotors (38) bewegbar ist.

7. Etikettiervorrichtung nach einem der vorhergehenden Ansprüche, **dadurch gekennzeichnet, dass** am hinteren Ende (30b) des beweglichen Teils (29) des Stößels (24), das von dem vorderen Ende (30a) des beweglichen Teils (29) des Stößels (24) abgewandt ist, ein Permanentmagnet (37) befestigt ist, wobei die Aufnahmeeinrichtung (21) einen Hall-Sensor (36) zum Messen des Magnetfeldes des Permanentmagneten (37) aufweist, und wobei der Hall-Sensor (36) mit einer Steuereinheit (35) zur Anzeige einer Verschiebung des beweglichen Teils (29) des Stößels (24) verbunden ist.

8. Etikettiervorrichtung nach Anspruch 7, **dadurch gekennzeichnet, dass** der Hall-Sensor (36) und der Permanentmagnet (37) in der ausgefahrenen Stellung (32) des beweglichen Teils (29) des Stößels (24) in Bezug auf die Grundplatte (27) auf gleicher Höhe angeordnet sind.

9. Etikettiervorrichtung nach einem der vorhergehenden Ansprüche, **dadurch gekennzeichnet, dass** die Roboterbasis (19) mit der Plattform (20) durch ein Rückholelement (26) zum mechanischen Rücktransport der Aufnahmeeinrichtung (21) entgegen der Schwerkraft in ihre Ausgangsposition im Ruhezustand des Roboters (14) verbunden ist.

10. Etikettiervorrichtung nach Anspruch 9, **dadurch gekennzeichnet, dass** das Rückholelement (26) ein elastisches Spannseil (48) aufweist, insbesondere aus Gummi oder Latex.

11. Etikettiervorrichtung nach Anspruch 10, **dadurch gekennzeichnet, dass** ein Stromkabel (50) zur Versorgung der Aufnahmeeinrichtung (21) mit Strom an dem Spannseil (21) geführt ist.

12. Etikettiervorrichtung nach einem der vorhergehenden Ansprüche, **dadurch gekennzeichnet, dass** jeweils der zweite Armabschnitt (17b) der Gelenkarme (16a - 16c) ein erstes und/oder zweites Ende (54a, 54b) mit einer Lasche (55) mit einer, insbesondere kreisförmigen, nach außen geschlitzten Durchgangsaufnahme (56) zum Halten eines kugelförmigen Schraubenkopfs (58) aufweisen.

13. Etikettiervorrichtung nach Anspruch 12, **dadurch gekennzeichnet, dass** kugelförmige Schraubköpfe (58) in die Laschen (55) an den Enden (54a, 54b) des ersten und/oder zweiten Armabschnitts (17a, 17b) zur Verbindung der Armabschnitte (17a, 17b) untereinander und/oder mit der Plattform (20) und/oder mit der Roboterbasis (19) eingeführt sind, wobei die Laschen (55) die kugelförmigen Schraubköpfe (58) kraftschlüssig umklammern.

14. Etikettiervorrichtung nach einem der vorhergehende Ansprüche, **dadurch gekennzeichnet, dass** der jeweilige erste und/oder zweite Armabschnitt (17a, 17b) der Gelenkarme (16a - 16c) als Carbon-Stab ausgebildet ist.

15. Etikettiervorrichtung nach einem der Ansprüche 12 bis 14, **dadurch gekennzeichnet, dass** die Enden (54a, 54b) der ersten und/oder zweiten Armabschnitte (17a, 17b) der Gelenkarme (16a - 16c) mit den Laschen (55) zumindest teilweise aus Kunststoffmaterial mit guten Gleiteigenschaften, insbesondere aus Basispolymeren, Fasern und Füllstoffen sowie Festschmierstoffen, vorzugsweise aus iglidur^{®}, gefertigt sind.

## Claims

1. Labeling device (11) for a stretch-film packaging machine (10), comprising a robot (14) having delta kinematics, at least two articulated arms (16a-16c) which each have a first and a second arm portion (17a, 17b) which are mutually interconnected in an articulated manner, the articulated arms (17a, 17b) in each case being connected in an articulated manner at a first end (54a) to a robot base (19) and at a second end (54b) to a platform (20) of a receiving device (21) to be moved for receiving a label, and the articulated arms (17a, 17b) being pivotable on the robot base (19) about a relevant axis of rotation and being driven in each case by a motor (22a-22c) which is fixedly attached to the robot base (19),
**characterized in that**
the receiving device (21) has a base plate (27) and a ram (24) for receiving the label,
**in that** the ram (24) comprises a fixed part (28) which is mounted on the base plate (27) and cannot be displaced with respect to the base plate (27) in the longitudinal direction (LA) of the ram (24), and a part (29) of the ram (24) that can be moved in the fixed part (28) in the longitudinal direction (LA) of the ram (24) and has a front end (30a) for receiving a label,
**in that** the ram (24) has a mechanical pressure controller (41) for interrupting a negative pressure in the ram (24), which negative pressure is used to receive the label,
and **in that** the movable part (29) of the ram (24) can be displaced in the direction of the longitudinal axis (LA) of the ram (24) through the fixed part (28) of the ram (24) in the direction of the base plate (27) into a retracted position (33), the movable part (29) of the ram (24) having an opening (42), the opening (42) being covered in a gas-tight manner by the fixed part (28) of the ram (24) in an extended position (32) of the movable part (29) of the ram (24) for receiving the label, and not being covered by the fixed part (28) of the ram (24) in the retracted position (33) of the movable part (29) of the ram (24).

2. Labeling device according to claim 1, **characterized in that** the opening (42) is designed to be closer to the rear end (30b) of the movable part (29) of the ram (24), which faces away from the front end (30a) thereof, than to the front end (30a) thereof.

3. Labeling device according to either of the preceding claims,
**characterized in that** a suction head (46) is fastened to the front end (30a) of the movable part (29) of the ram (24), which suction head is connected via the ram (24) to a negative pressure pump (40), which is preferably fastened to the base plate (27).

4. Labeling device according to any of the preceding claims, **characterized in that** the movable part (29) and/or the fixed part (28) of the ram (24) is shaped tubular.

5. Labeling device according to any of the preceding claims,
**characterized in that** the movable part (29) of the ram (24) is held in the extended position (32) by a spring element (31) in an unloaded state.

6. Labeling device according to any of the preceding claims,
**characterized in that** the movable part (29) and/or the fixed part (28) of the ram (24) is mounted so as to be rotatable relative to the base plate (27) about the longitudinal axis (LA) of the ram (24), and can preferably be moved by means of a rotary motor (38).

7. Labeling device according to any of the preceding claims,
**characterized in that** a permanent magnet (37) is fastened at the rear end (30b) of the movable part (29) of the ram (24), which faces away from the front end (30a) of the movable part (29) of the ram (24), the receiving device (21) having a Hall Sensor (36) for measuring the magnetic field of the permanent magnet (37), and the Hall Sensor (36) being connected to a control unit (35) for displaying a displacement of the movable part (29) of the ram (24).

8. Labeling device according to claim 7, **characterized in that** the Hall Sensor (36) and the permanent magnet (37) are arranged at the same height with respect to the base plate (27) in the extended position (32) of the movable part (29) of the ram (24).

9. Labeling device according to any of the preceding claims,
**characterized in that** the robot base (19) is connected to the platform (20) via a retracting element (26) for mechanically returning the receiving device (21), counter to gravity, to its starting position in the rest state of the robot (14).

10. Labeling device according to claim 9, **characterized in that** the retracting element (26) has an elastic tensioning rope (48), in particular made of rubber or latex.

11. Labeling device according to claim 10, **characterized in that** a power cable (50) for supplying power to the receiving device (21) is guided on the tensioning rope (21).

12. Labeling device according to any of the preceding claims,
**characterized in that**, in each case, the second arm portion (17b) of the articulated arms (16a-16c) has a first and/or second end (54a, 54b) having a lug (55) which has an in particular circular, outwardly-slotted through-receptacle (56) for holding a spherical screw head (58).

13. Labeling device according to claim 12, **characterized in that** spherical screw heads (58) are inserted into the lugs (55) at the ends (54a, 54b) of the first and/or second arm portion (17a, 17b) in order to connect the arm portions (17a, 17b) to one another and/or to the platform (20) and/or to the robot base (19), the lugs (55) holding the spherical screw heads (58) in a force-fitting manner.

14. Labeling device according to any of the preceding claims,
**characterized in that** the relevant first and/or second arm portion (17a, 17b) of the articulated arms (16a-16c) is designed as a carbon rod.

15. Labeling device according to any of claims 12 to 14, **characterized in that** the ends (54a, 54b) of the first and/or second arm portions (17a, 17b) of the articulated arms (16a-16c) having the lugs (55) are manufactured at least in part from plastics material having good sliding properties, in particular from base polymers, fibers and fillers, as well as solid lubricants, preferably iglidur^{®}.

## Revendications

1. Dispositif d'étiquetage (11) pour une machine d'emballage à film étirable (10), comprenant un robot (14) à cinématique delta, comportant au moins deux bras articulés (16a - 16c) qui présentent respectivement une première et une seconde section de bras (17a, 17b), lesquelles sont reliées entre elles de manière articulée, dans lequel les bras articulés (17a, 17b) sont respectivement reliés de manière articulée, à une première extrémité (54a), à une base de robot (19) et, à une seconde extrémité (54b), à une plate-forme (20) d'un appareil de réception (21) à mouvoir permettant de recevoir une étiquette, et dans lequel les bras articulés (17a, 17b) peuvent pivoter sur la base de robot (19) autour d'un axe de rotation respectif et sont respectivement entraînés par un moteur (22a - 22c) monté fixement sur la base de robot (19),
**caractérisé en ce que**
l'appareil de réception (21) présente une plaque de fondation (27) et un poussoir (24) permettant de recevoir l'étiquette, **que** le poussoir (24) comprend une partie fixe (28) montée sur la plaque de fondation (27) et ne pouvant pas être déplacée par rapport à la plaque de fondation (27) dans une direction longitudinale (LA) du poussoir (24), et une partie (29) du poussoir (24) mobile dans la direction longitudinale (LA) du poussoir (24) dans la partie fixe (28) et comportant une extrémité avant (30a) permettant de recevoir une étiquette,
**que** le poussoir (24) présente un régulateur de pression mécanique (41) permettant d'interrompre un vide servant à recevoir l'étiquette dans le poussoir (24),
**et que** la partie mobile (29) du poussoir (24) peut être déplacée dans la direction de l'axe longitudinal (LA) du poussoir (24) à travers la partie fixe (28) du poussoir (24) en direction de la plaque de fondation (27) dans une position repliée (33), dans lequel la partie mobile (29) du poussoir (24) présente une ouverture (42), dans lequel l'ouverture (42) est recouverte de manière étanche aux gaz par la partie fixe (28) du poussoir (24) dans une position déployée (32) de la partie mobile (29) du poussoir (24) pour la réception de l'étiquette, et n'est pas recouverte par la partie fixe (28) du poussoir (24) dans la position repliée (33) de la partie mobile (29) du poussoir (24).

2. Dispositif d'étiquetage selon la revendication 1, **caractérisé en ce que** l'ouverture (42) est réalisée plus près de l'extrémité arrière (30b) de la partie mobile (29) du poussoir (24), laquelle extrémité arrière est opposée à l'extrémité avant (30a) de ladite partie mobile, que de l'extrémité avant (30a) de ladite partie mobile.

3. Dispositif d'étiquetage selon l'une des revendications précédentes,
**caractérisé en ce qu'**une tête d'aspiration (46) est fixée à l'extrémité avant (30a) de la partie mobile (29) du poussoir (24) et est reliée, par l'intermédiaire du poussoir (24), à une pompe à vide (40), de préférence fixée à la plaque de fondation (27).

4. Dispositif d'étiquetage selon l'une des revendications précédentes,
**caractérisé en ce que** la partie mobile (29) et/ou la partie fixe (28) du poussoir (24) sont réalisées en forme de tube.

5. Dispositif d'étiquetage selon l'une des revendications précédentes,
**caractérisé en ce que** la partie mobile (29) du poussoir (24) est maintenue dans la position déployée (32) par un élément formant ressort (31) à l'état non chargé.

6. Dispositif d'étiquetage selon l'une des revendications précédentes,
**caractérisé en ce que** la partie mobile (29) et/ou la partie fixe (28) du poussoir (24) sont montées de manière à pouvoir tourner par rapport à la plaque de fondation (27) autour de l'axe longitudinal (LA) du poussoir (24), de préférence sont mobiles au moyen d'un moteur rotatif (38).

7. Dispositif d'étiquetage selon l'une des revendications précédentes,
**caractérisé en ce qu'**un aimant permanent (37) est fixé à l'extrémité arrière (30b) de la partie mobile (29) du poussoir (24), laquelle extrémité arrière est opposée à l'extrémité avant (30a) de la partie mobile (29) du poussoir (24), dans lequel l'appareil de réception (21) présente un capteur à effet Hall (36) permettant de mesurer le champ magnétique de l'aimant permanent (37), et dans lequel le capteur à effet Hall (36) est connecté à une unité de commande (35) permettant d'indiquer un déplacement de la partie mobile (29) du poussoir (24).

8. Dispositif d'étiquetage selon la revendication 7, **caractérisé en ce que** le capteur à effet Hall (36) et l'aimant permanent (37) sont disposés à la même hauteur par rapport à la plaque de fondation (27) dans la position déployée (32) de la partie mobile (29) du poussoir (24).

9. Dispositif d'étiquetage selon l'une des revendications précédentes,
**caractérisé en ce que** la base de robot (19) est reliée à la plate-forme (20) par un élément de rappel (26) permettant le transport de retour mécanique de l'appareil de réception (21), à l'encontre de la force de gravité, vers sa position initiale à l'état de repos du robot (14).

10. Dispositif d'étiquetage selon la revendication 9, **caractérisé en ce que** l'élément de rappel (26) présente un tendeur (48) élastique, en particulier en caoutchouc ou en latex.

11. Dispositif d'étiquetage selon la revendication 10, **caractérisé en ce qu'**un câble électrique (50) permettant d'alimenter l'appareil de réception (21) en électricité est guidé sur le tendeur (21).

12. Dispositif d'étiquetage selon l'une des revendications précédentes,
**caractérisé en ce que** respectivement la seconde section de bras (17b) des bras articulés (16a - 16c) présente une première et/ou une seconde extrémité (54a, 54b) comportant une patte (55) comportant un réceptacle traversant (56), en particulier circulaire, fendu vers l'extérieur, et permettant de maintenir une tête de vis (58) de forme sphérique.

13. Dispositif d'étiquetage selon la revendication 12, **caractérisé en ce que** des têtes de vis (58) de forme sphérique sont insérées dans les pattes (55) aux extrémités (54a, 54b) de la première et/ou de la seconde section de bras (17a, 17b) pour la liaison des sections de bras (17a, 17b) entre elles et/ou à la plate-forme (20) et/ou à la base de robot (19), dans lequel les pattes (55) enserrent à force les têtes de vis (58) de forme sphérique.

14. Dispositif d'étiquetage selon l'une des revendications précédentes,
**caractérisé en ce que** la première et/ou la seconde section de bras (17a, 17b) respectives des bras articulés (16a - 16c) sont réalisées sous forme de tige en carbone.

15. Dispositif d'étiquetage selon l'une des revendications 12 à 14,
**caractérisé en ce que** les extrémités (54a, 54b) des premières et/ou secondes sections de bras (17a, 17b) des bras articulés (16a - 16c) comportant les pattes (55) sont fabriquées au moins en partie en matériau plastique comportant de bonnes propriétés de glissement, en particulier en polymères de base, fibres et charges ainsi que lubrifiants solides, de préférence en iglidur^{®}.
